# EUROPEAN PATENT SPECIFICATION

(11) **EP 3 255 307 B1**
(45) Date of publication and mention of the grant of the patent: **14.09.2022**
(21) Application number: 16746656.4
(22) Date of filing: 03.02.2016
(51) Int. Cl.: F16H 25/22, B21D 39/00, B21K 1/70, B22F 3/02, F16H 25/24

(54) **BRIDGE-TYPE BALL SCREW AND METHOD FOR MANUFACTURING SAME**
BRÜCKENARTIGE KUGELSPINDEL UND VERFAHREN ZUR HERSTELLUNG DAVON
VIS À BILLES DE TYPE PONT ET SON PROCÉDÉ DE FABRICATION

(30) Priority: 04.02.2015 JP 2015019955
(43) Date of publication of application: 13.12.2017
(73) Proprietor: NTN Corporation, Osaka-shi, Osaka 550-0003 (JP)
(72) Inventor: SHIMIZU, Tatsunori, Iwata-shi Shizuoka 438-8510 (JP)
(74) Representative: Cohausz & Florack
(86) International application number: PCT/JP2016/053208
(87) International publication number: WO 2016/125825

(56) References cited:
- JP-A- 2005 121 042
- JP-A- 2005 299 719
- JP-A- 2008 281 063
- JP-A- 2008 286 353

## Description

### Field of the Invention

The present invention relates to a ball screw used in various machine tools such as electric discharging machines and tapping centers etc. or an electric power steering and actuators etc. of automobiles, more particularly to a bridge-type ball screw using a bridge member for circulating balls and a manufacturing method thereof.

### Description of Background Art

The ball screw comprises a screw shaft formed with a helical screw groove on its outer circumference, a nut formed with a helical screw groove on its inner circumference and mated with the screw shaft, a large number of balls accommodated within a rolling track formed by the opposite screw grooves, and a circulating mechanism for making the rolling track a circulating track and is used e.g. as a motion conversion mechanism for linearly driving the screw shaft by rotating the nut.

In general, there are various types of ball circulating mechanisms in the ball screw and one of which is a bridge-type. The bridge-type ball screw has linking track of the screw grooves and bridge members are mounted on a nut for making a rolling track a circulating track and its structure is relatively simple and compact.

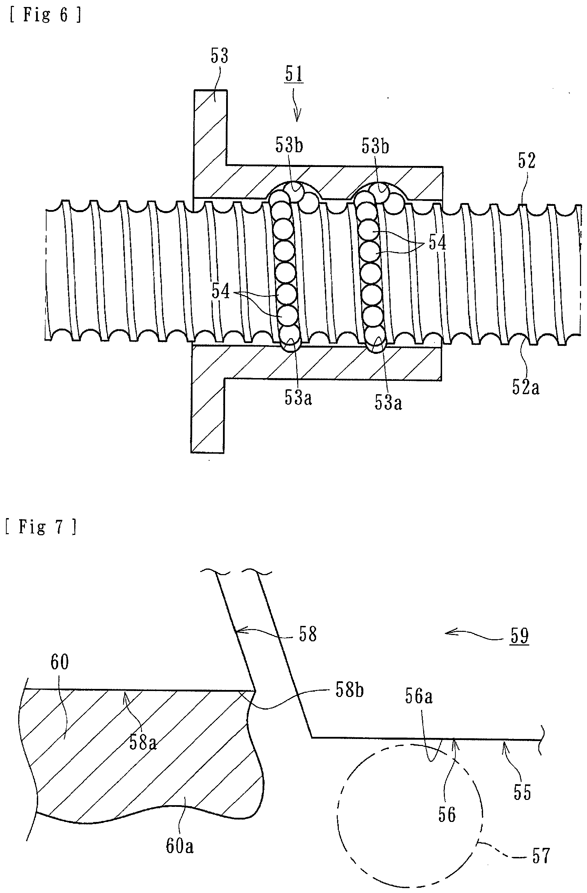

In such a bridge-type ball screw, the bridge member for circulating balls is fitted in a through hole formed at a cylindrical barrel of the nut. However, steps would be caused in a ball transfer part which connects screw grooves of the nut and circulating grooves formed as "S"-shaped curves on an inner surface of the bridge member. These steps would cause abnormal noise and thus reduce the life of the ball screw. Known is a ball screw 51 shown in Fig. 6 which can solve these problems. The ball screw 51 comprises a screw shaft 52 formed with a helical screw groove 52a on its outer circumference, a nut 53 formed with a screw groove 53a on its inner circumference and mated with the screw shaft 52, and a large number of balls 54 accommodated within a rolling track formed by the opposite screw grooves 52a, 53a. Instead of the bridge members, this ball screw 51 uses circulation groove (linking track) 53b formed by plastic working on the inner circumference of the nut 53 and then the screw groove 53a is formed by cutting with a rotary tool.

This ball screw of the prior art enables to guide balls 54 between the screw groove 53a of the nut 53 and the circulation grooves 53b without causing abnormal noise or torque variation (catching etc.) and thus to suppress life reduction (e.g. see Patent Document 1 below).

However, this method of the prior art cannot avoid generation of the steps or edges due to variation of plastic working and cutting working. In addition, the formation of the screw groove 53a by rotary tool needs very long cycle time and thus is not preferable due to increase of manufacturing cost.

On the other hand, it has been proposed a ball screw 59 shown in Fig. 7. In this ball screw 59, balls 57 are set in a screw groove 56 of a nut 55 and a bridge member 58 having a circulation groove (linking groove) 58a is mounted on the nut 55. When assembling the ball screw 59, it is possible to efficiently eliminate the step between the screw groove 56 of the nut 55 and the circulation groove 58a of the bridge member 58 by mounting the bridge member 58 coated with a coating layer 60 on a boundary surface 58b of the bridge member 58 forming boundary with a surface 56a of the screw groove 56, engaging the nut 55 with a screw shaft, circulating balls 57 between the screw groove 56 and the circulation groove 58a, and cutting protruded portion 60a of the coating layer 60 into the screw groove 56 from the surface 56a of the screw groove 56 (e.g. see Patent Document 2 below).

### Documents of the Prior Art

### Patent Documents

Patent Document 1: JP 2012 -82961 A
Patent Document 2: JP 2014 -145463 A

JP 2005- 121042 A discloses a ball screw mechanism for electric power steering device, has tool with infeed depth which gradually changes as tool moves towards joint so that acute angle is formed by boundary lines between finished and unfinished surfaces on both flanks. Disclosure of the Invention

### Problems to be solved by the Invention

However, in the ball screw 59 of the prior art, it is afraid that the coating layer 60 would be peeled off by repeatedly passing of rolling balls 57 and thus the durability and reliability as well as life of the ball screw would be impaired and additionally abnormal noise would be also caused by the peeled debris.

The inventor focused on plastically working the ball transfer part where the linking groove of the bridge member and the screw groove of the nut is connected and an object of the present invention is to provide a bridge-type ball screw of low manufacturing cost which has an improved durability and reliability and can prevent generation of abnormal noise with eliminating and smoothening the step of the ball transfer part.

### Means for solving the Problems

For achieving the object of the present invention, there is provided according to the present invention a bridge-type ball screw according to claim 1 and a method of manufacturing the same according to claim 4.

Since the bridge-type ball screw of the present invention comprises bridge members each formed on the inner surface with a linking groove for making the rolling track a circulating track and fitted in a bridge window formed on a barrel of the nut and is characterized in that at least a connection part between the linking groove of the bridge member and a ball transfer part of the nut is smoothly formed by plastic working, it is possible to provide a bridge-type ball screw of low manufacturing cost which has an improved durability and reliability and can prevent generation of abnormal noise caused by passage of balls with eliminating and smoothening the step of the ball transfer part.

It is also preferable that the bridge member is formed of sintered metal formed by MIM (Metal Injection Molding). This makes it possible to form the bridge member as having a desirable exact configuration and dimensions although the bridge member needs high working accuracy and has a complicated configuration.

It is preferable that a radially outer-side opening portion of a bridge window of the nut has an engagement part having a diameter larger than that of the bridge window and the bridge member is secured to the nut by plastically deforming several points of a radially outer periphery of the bridge member so that they are closely contacted with the engagement part.

According to the method for manufacturing a bridge-type ball screw, since it comprises bridge members each formed on the inner surface with a linking groove for making the rolling track a circulating track and fitted in a bridge window formed on a barrel of the nut and is characterized in that the method comprises steps of inserting a cylindrical mandrel having projections into the nut after having fitted the bridge members in the bridge window of the nut and pressing the projections of the mandrel both onto the linking groove of the bridge members and ball transfer parts of the screw grooves of the nut to form connection parts between the bridge members and the nut by plastic working, it is possible to smoothly form a connection part between the linking groove of the bridge member and a ball transfer part of the nut, and also to provide a bridge-type ball screw of low manufacturing cost which has an improved durability and reliability and can prevent generation of abnormal noise caused by passage of balls with eliminating and smoothening the step of the ball transfer part.

It is preferable that each of the projections of the mandrel is formed as having a configuration comprising a bridge forming part corresponding to the linking groove of the bridge member and connection parts corresponding to the ball transfer part of the screw groove of the nut. This makes it possible to smoothly form the connection part between the linking groove of the bridge member and the screw groove of the nut.

It is also preferable that an upper die arranged above the nut and restricting the upper surface of the bridge member is lowered under a condition in which the mandrel is horizontally supported and then further lowered under a condition in which the nut is sandwiched and supported by the upper die and the mandrel to plastically work the connection parts between the linking grooves of the bridge member and the screw grooves of the nut and to simultaneously perform plastic deformation of the upper surface of the bridge member in order to secure the bridge member to the bridge window of the nut by caulking the upper surface of the bridge member. This makes it possible to prevent the bridge member from being moved during the plastic working of the outer surface of the bridge member and thus to prevent generation of steps between the linking grooves and the screw grooves. Accordingly, it is possible to achieve efficient fixation of the bridge member and reduction of the manufacturing cost.

It is preferable that the nut and the bridge member are hardened by simultaneous heat treatment after the plastic working. This enables to make high frequency temper treatment unnecessary as the prior art for preventing generation of cracks when caulking and securing the bridge member to the nut and thus to reduce the manufacturing cost.

### Effects of the Invention

According to the a bridge-type ball screw of the present invention, since it comprises a screw shaft formed on the outer circumference with a helical screw groove; a nut formed on the inner circumference with a helical screw groove and mated with the screw shaft; a plurality of balls accommodated within a rolling track formed by the opposite screw grooves; and bridge members each formed on the inner surface with a linking groove for making the rolling track a circulating track and fitted in a bridge window formed on a barrel of the nut and is characterized in that at least a connection part between the linking groove of the bridge member and a ball transfer part of the nut is smoothly formed by plastic working, it is possible to provide a bridge-type ball screw of low manufacturing cost which has an improved durability and reliability and can prevent generation of abnormal noise caused by passage of balls with eliminating and smoothening the step of the ball transfer part.

In addition, according to the method for manufacturing a bridge-type ball screw of the present invention, since it comprises a screw shaft formed on the outer circumference with a helical screw groove; a nut formed on the inner circumference with a helical screw groove and mated with the screw shaft; a plurality of balls accommodated within a rolling track formed by the opposite screw grooves; and bridge members each formed on the inner surface with a linking groove for making the rolling track a circulating track and fitted in a bridge window formed on a barrel of the nut and is characterized in that the method comprises steps of inserting a cylindrical mandrel having projections into the nut after having fitted the bridge members in the bridge window of the nut and pressing the projections of the mandrel both onto the linking groove of the bridge members and ball transfer parts of the screw grooves of the nut to form connection parts between the bridge members and the nut by plastic working, it is possible to smoothly form a connection part between the linking groove of the bridge member and a ball transfer part of the nut, and also to provide a bridge-type ball screw of low manufacturing cost which has an improved durability and reliability and can prevent generation of abnormal noise caused by passage of balls with eliminating and smoothening the step of the ball transfer part.

### Brief description of the Drawings

[Fig. 1(a)] A plan view showing one preferable embodiment of a bridge-type ball screw of the present invention;
[Fig. 1(b)] A longitudinal section view of Fig. 1(a);
[Fig. 2(a)] A longitudinal section view showing a nut of the present invention;
[Fig. 2(b)] A partially cross-sectional view showing a ball transfer part of a screw groove of the nut of Fig. 2(a);
[Fig. 3] An explanatory view showing a method for manufacturing the bridge-type ball screw of the present invention;
[Fig.4(a)] A plan view showing a mandrel used for the working of Fig. 3;
[Fig. 4(b)] A perspective view Fig. 4(a);
[Fig. 5(a)] A cross-sectional explanation view taken along a line V-V of Fig. 1 and showing a state before the working;
[Fig. 5(b)] A cross-sectional explanation view taken along a line V-V of Fig. 1 and showing a state during the working;
[Fig. 6] A longitudinal cross-section view showing a ball screw of the prior art; and
[Fig. 7] A schematic view showing a step between a circulating groove of the bridge member and a screw groove of the nut before adjustment of the bridge-type ball screw of the prior art.

### Mode for carrying out the Invention

One mode for carrying out the present invention is a method for manufacturing a bridge-type ball screw comprising a screw shaft formed on the outer circumference with a helical screw groove; a nut formed on the inner circumference with a helical screw groove and mated with the screw shaft; a plurality of balls accommodated within a rolling track formed by the opposite screw grooves; and bridge members each formed on the inner surface with a linking groove for making the rolling track a circulating track and fitted in a bridge window formed on a barrel of the nut and characterized in that inserting a cylindrical mandrel having projections into the nut after having fitted the bridge members in the bridge window of the nut, and an upper die arranged above the nut and restricting the upper surface of the bridge member is lowered under a condition in which the mandrel is horizontally supported and then further lowered under a condition in which the nut is sandwiched and supported by the upper die and the mandrel to plastically work the connection parts between the linking grooves of the bridge member and the screw grooves of the nut and to simultaneously perform plastic deformation of the upper surface of the bridge member in order to secure the bridge member to the bridge window of the nut by caulking the upper surface of the bridge member.

### Embodiment

One preferable embodiment of the present invention will be hereinafter described with reference to the drawings.

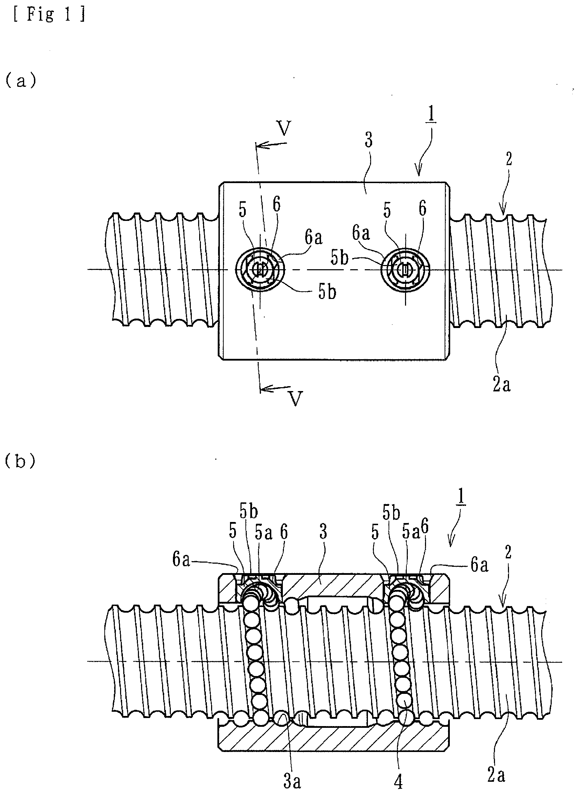

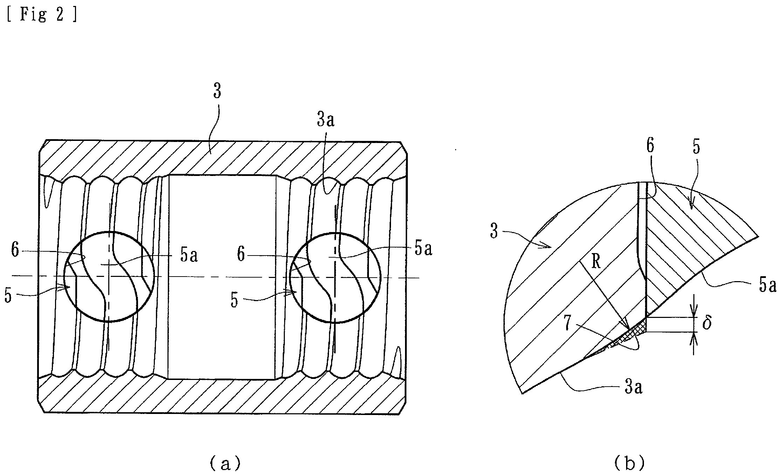

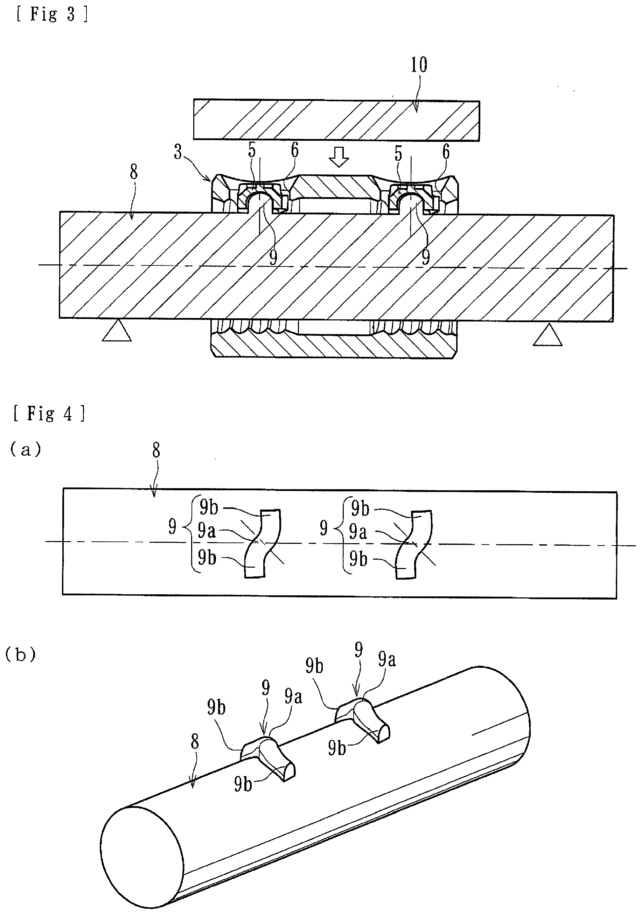

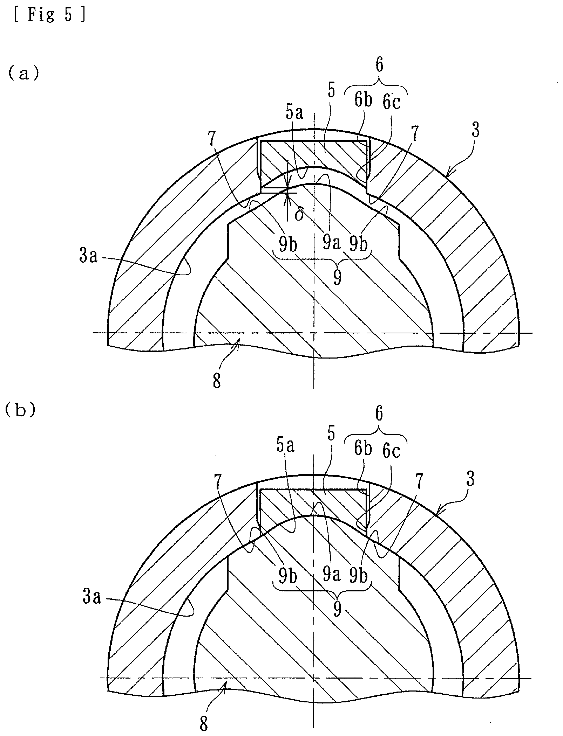

Fig. 1(a) is a plan view showing one preferable embodiment of a bridge-type ball screw of the present invention; Fig.1(b) is a longitudinal section view of Fig. 1(a); Fig. 2(a) is a longitudinal section view showing a nut of the present invention; Fig. 2(b) is a partially cross-sectional view showing a ball transfer nut of a screw groove of the nut of Fig. 2(a); Fig. 3 is an explanatory view showing a method for manufacturing the bridge-type ball screw of the present invention; Fig. 4(a) is a plan view showing a mandrel used for the working of Fig. 3; Fig. 4(b) is a perspective view Fig. 4(a); Fig. 5(a) is a cross-sectional explanation view taken along a line V-V of Fig. 1 and showing a state before the working; and Fig. 5(b) is a cross-sectional explanation view taken along a line V-V of Fig. 1 and showing a state during the working.

A bridge-type ball screw 1 shown in Figs. 1(a) and (b) comprises a screw shaft 2 formed on its outer circumference with a helical screw groove 2a, a nut 3 formed on its inner circumference with helical screw groove 3a and engaged with the screw shaft 2, a number of balls 4 accommodated within a rolling track formed by the opposite screw grooves 2a, 3a, and bridge members 5, 5 for circulating the balls 4.

The cross-sectional configuration of each of screw grooves 2a, 3a may be either one of circular-arc or Gothic-arc configuration. However, the Gothic-arc configuration is adopted in this embodiment since it can have a large contacting angle with the ball 4 and set a small axial gap. This enables to have large rigidity against the axial load and thus to suppress generation of vibration.

The nut 3 is formed of medium carbon carburized steel such as SCM 430 or SCM 435 etc. including C of 0.30 to 0.35 wt%. Bridge windows 6, 6 are formed on a cylindrical barrel of the nut 3. Each bridge window 6 has a substantially circular configuration and extends through the outer and inner surfaces partially cutting out the screw groove 3a. Each bridge member 5 having a circular configuration corresponding to the bridge window 6 is fitted into the bridge window 6. A linking groove 5a mutually connecting adjacent one laps of the screw grooves 3a is formed on the inner circumference of the bridge member 5 and forms the rolling track of balls 4 cooperating with a substantially one lap of the screw groove 3a. A large number of balls 4 accommodated between the screw grooves 2a, 3a of the rolling track roll along the screw grooves 2a, 3a and are guided to the linking groove 5a of the bridge member 5 and then ride over the screw thread of the screw shaft 2 and return to the screw groove 3a and roll again along the screw grooves 2a, 3a. In this case, although the illustrated configurations of the bridge window 6 and bridge member 5 are circular, other configurations such as an ellipse may be used.

As shown in Fig. 2(a), the linking groove 5a of the bridge member 5 is formed as a "S"-shaped curve in order to smoothly connect the mutually adjacent screw grooves 3a, 3a as well as between the linking groove 5a and the screw grooves 3a. In addition, a depth of the linking groove 5a is set so that the balls 4 can ride over the screw thread of the screw groove 2a of the screw shaft 2 within the linking groove 5a of the bridge member 5.

In the present embodiment, the bridge member 5 is formed of sintered alloy by an injection molding machine for molding plastically prepared metallic powder. In this injection molding, metallic powder and binder comprising plastics and wax are firstly mixed and kneaded by a mixing and kneading machine to form pellets from the mixed and kneaded material. The pellets are fed to a hopper of the injection molding machine and then pushed into dies under a heated and melted state and finally formed to the bridge member by a so-called MIM (Metal Injection Molding). The MIM method can easily mold sintered alloy material to article having desirable accurate configurations and dimensions although the article require high manufacturing technology and have configurations hard to form.

One example of metallic powder for the sintering alloy able to be carburized is SCM415 comprising C of 0.13 wt%, Ni of 0.21 wt%, Cr of 1.1 wt%, Cu of 0.04 wt%, Mn of 0.76 wt%, Mo of 0.19 wt%, Si of 0.20 wt% and remainder Fe etc.

Other than the metallic powder for sintering alloy formed by MIM described above, there are examples of sintering alloy powders such as completely alloyed powder of Fe, Mo and Ni (atomized iron powder of alloyed and melted steel in which alloyed components are uniformly distributed in grains) or partially alloyed powder (alloyed powder in which partially alloyed powder is adhered to pure iron powder). More particularly, one example of them is hybrid type alloyed powder (trade name JIP21SX of JFE steel Co., Japan) in which pre-alloy copper powder comprising Fe of 2% by weight, Ni of 1% by weight and Mo is adhered to fine Ni powder, Cu powder and graphite powder via binder. This hybrid type alloyed powder is able to obtain high mechanical strength (tensioning strength and hardness) due to increase of martensite phase ratio to the metallic structure of sintered body with increasing the cooling speed (higher than 50°C/min) after sintering, to eliminate heat treatment after sintering and thus to provide the bridge member 5 of high accuracy. It is preferable to add Mo of 0.5 to 1.5% by weight in order to improve the hardenability and Ni of 2 to 4% by weight in order to improve the toughness of a sintered body.

Incorporation of balls 4 into the bridge-type ball screw 1 can be performed after the bridge members 5 have been mounted in the bridge windows 6 of the nut 3 from the radially outward of the nut 3, by abutting the nut 3 against one end of the screw shaft 2, rotating the nut 3 with sequentially introducing the balls 4 into the space between the screw grooves 2a, 3a, and then moving the nut 3 along the screw shaft 2. Alternatively, the balls 4 may be similarly introduced using a temporary shaft after the bridge members 5 having been mounted in the bridge windows 6.

As shown in Fig. 2(b), steps δ (shown by cross-hatchings) are generated due to variations in dimensions etc. at ball transfer parts 7 wherein the linking grooves 5a of the bridge members 5 and screw grooves 3a of the nut 3 are connected under a condition in which the bridge members 5 are fitted in the bridge windows 6 of the nut 3. The applicant has noticed to plastically work the steps δ of the ball transfer parts 7. That is, the ball transfer parts 7 are formed by plastically deforming edge parts of the bridge windows 6 of the nut 3 by pressing the nut 3 fitted with the bridge members 5 to a cylindrical mandrel 8 having S-shaped projections 9 each having a configuration corresponding to the linking groove 5a of the bridge member 5.

More particularly, the mandrel (lower die) 8 is inserted into the nut 3 as shown in Fig. 3 after the bridge members 5 have been fitted in the bridge window 6 of the nut 3. Then, an upper die 10 arranged above the nut 3 is lowered with keeping the mandrel 8 horizontal and then the upper die 10 is further lowered under a condition in which the nut 3 is sandwiched between the upper die 10 and the mandrel 8 in order to plastically deform the configurations of the linking grooves 5a of the bridge members 5 and the screw grooves 3a of the nut 3 connected to the linking grooves 5a to the configurations of the projections 9.

As shown in Figs. 4(a) and (b), the mandrel 8 is formed on its outer circumference with S-shaped projections 9 each having a configuration corresponding to that of the linking groove 5a of the bridge member 5. The outer circumferential surface of the projection 9 is formed so that it has a configuration comprising a bridge forming part (central part) 9a corresponding to the linking groove 5a of the bridge member 5 and connection parts 9b, 9b corresponding to the ball transfer part 7 of the screw groove 3a of the nut 3. In addition, an outer diameter of the body of the mandrel 8 is smaller than an inner diameter of the nut 3 so as to prevent interference of the mandrel 8 with nut 3.

Then, the plastic working of the linking grooves 5a of the bridge member 5 and the ball transfer parts 7 of the nut 3 will be described with reference to Fig. 5. As shown in Fig. 5(a), the step δ is generated at the ball transfer parts 7 of the nut 3 in which the linking groove 5a of the bridge member 5 and the screw groove 3a of the nut 3 are connected under a condition in which the bridge member 5 is fitted in the bridge window 6 of the nut 3. The upper surface of the bridge member 5 is constrained by an upper die (not shown in Fig. 5) to prevent getting out of the bridge member 5 radially outward. By further lowering the upper die from this state under a condition in which the nut 3 is sandwiched between the upper die and the mandrel 8, the linking groove 5a of the bridge member 5 and ball transfer parts 7 of the nut 3 connected to the linking groove 5a are plastically deformed to the outer circumferential configuration of the projection 9. Since each the ball transfer part 7 is set so that it has a convex circular arc of a desirable radius of curvature R (Fig. 2(b)) continuous to the end of the linking groove 5a, it is possible to smoothly form the connection parts between the linking grooves 5a and the ball transfer parts 7.

According to the plastic working of the present invention, it is possible to simultaneously form the linking grooves 5a of the bridge members 5 and the ball transfer parts 7 of the screw grooves 3a of the nut 3 to a desired configuration. Accordingly, since the steps at the ball transfer parts 7 are eliminated and the connection parts between the linking grooves 5a and the ball transfer parts 7 are smoothly formed, it is possible to provide a bridge-type ball screw of low manufacturing cost which has an improved durability and reliability and can prevent generation of abnormal noise caused by passage of balls.

Although it is described that the bridge member 5 is previously formed by MIM from sintering alloy powder, the linking groove 5a may be finished to a final configuration and dimensions or intermediate configuration and dimensions on MIM. That is, the linking groove 5a may be formed to a dimension remaining the plastic working margin smaller than a final dimension and then formed to a final configuration and dimension by the mandrel 8 previously described.

As shown in Fig. 1(b), a radially outer-side opening part (engagement part) 6a of the bridge window 6 of the nut 3 is formed as a tapered shape having a gradually increasing diameter to radially outward and the bridge member 5 can be secured to the nut 3 by partially squeezing and plastically deforming several (four in the illustrated embodiment) points of the outer periphery 5b of the bridge member 5 until they are closely contacted with the opening part 6a.

In accordance with the present embodiment, the outer circumferential surfaces 5b are plastically deformed as shown in Fig. 3 by the upper die 10 simultaneously with the plastic working of the linking grooves 5a of the bridge members 5 and the ball transfer parts 7 of the nut 3 under the condition in which the nut 3 is sandwiched between the upper die 10 and the mandrel 8. This makes it possible to prevent movement of the bridge member 5 during the plastic working of the outer circumferential surface 5b of the bridge member 5 and thus to prevent generation of steps between the linking grooves 5a and the ball transfer parts 7. In addition, it is further possible to efficiently secure the bridge members 5 and thus reduce the manufacturing cost of the ball screw.

As shown in Fig. 5, the radially outer-side opening part 6b of the bridge window 6 of the nut 3 has an inner diameter larger than the outer diameter of the bridge member 5 and the radially inner-side opening part 6c of the bridge window 6 has an inner diameter same as the outer diameter of the bridge member 5 or having small interference therewith. This makes it possible to perform the insertion operation of the bridge member 5 into the bridge window 6 without inclination of the bridge member 5 as well as to obtain smooth flow of material of the bridge member 5 during the plastic working and thus to prevent generation of an excessive stress on the bridge window 6.

Further according to the present embodiment, the nut 3 and the bridge member 5 are cementation quenched and tempered with controlling temperature after the plastic working. This makes it possible to eliminate the high frequency tempering treatment for preventing generation of cracking etc. during squeezing the bridge member to the nut and thus reduce the manufacturing cost. The surface of the nut 3 is hardened by cementation quenching to 58 to 64 HRC (the bridge member 5: hardened to 30 to 40 HRC). When the nut 3 is formed of medium carbon cemented steel including carbon of 0.30 to 0.35 wt% such as SCM430 or SCM435, it is possible to reduce the heat treatment time for cementation quenching and also suppress generation of grain boundary oxidation layer in the surface.

The present invention has been described with reference to the preferred embodiment. Obviously, modifications and alternations will occur to those of ordinary skill in the art upon reading and understanding the preceding detailed description. It is intended that the present invention be construed as including all such alternations and modifications insofar as they come within the scope of the appended claims

### Applicability in Industries

The bridge-type ball screw of the present invention can be applied to various bridge-type ball screw used for electric actuators of automobiles.

### Description of Reference numerals

- 1: bridge-type ball screw
- 2: screw shaft
- 2a, 3a: screw groove
- 3: nut
- 4: ball
- 5: bridge member
- 5a: linking groove
- 5b: outer circumferential surface of the bridge member
- 6: bridge window
- 6a, 6b: radially outer-side opening part of the bridge window
- 6c: radially inner-side opening part of the bridge window
- 7: ball transfer part
- 8: mandrel
- 9: projection
- 9a: bridge forming part
- 9b: connection part
- 10: upper die
- 51, 59: ball screw
- 52: screw shaft
- 52a, 53a, 55a, 56: screw groove
- 53,55: nut
- 53b, 58a: circulation groove
- 54, 57: ball
- 56a: surface of screw groove
- 58: bridge member
- 58b: boundary surface
- 60: coating layer
- 60a: protruded portion
- δ: step

## Claims

1. A bridge-type ball screw (1) comprising:
a screw shaft (2) formed on the outer circumference with a helical screw groove (2a);
a nut (3) formed on the inner circumference with a helical screw groove (3a) and mated with the screw shaft (2);
a plurality of balls (4) accommodated within a rolling track formed by the opposite screw grooves (2a and 3a); and
bridge members (5) each formed on the inner surface with a linking groove (5a) for making the rolling track a circulating track and fitted in a bridge window (6) formed on a barrel of the nut (3) **characterized in:**
**that** at least a connection part between the linking groove (5a) of the bridge member (5) and a ball transfer part (7) of the nut (3) is smoothly formed by plastic working, that the linking groove (5a) of the bridge member (5) and the ball transfer parts (7) of the screw grooves (3a) of the nut (3) are formed by plastic working simultaneously and in that the ball transfer part (7) of the screw groove (3a) of the nut (3) is continuous to the end of the linking groove (5a) of the bridge member (5) and formed as a convex surface having a predetermined radius of curvature (R).

2. The bridge-type ball screw of claim 1 wherein the bridge member (5) is formed of sintered metal formed by MIM (Metal Injection Molding).

3. The bridge-type ball screw of claim 1 wherein a radially outer-side opening portion (6b) of a bridge window (6) of the nut (3) has an engagement part (6a) having a diameter larger than that of the bridge window (6) and the bridge member (5) is secured to the nut (3) by plastically deforming several points of a radially outer periphery (5b) of the bridge member (5) so that they are closely contacted with the engagement part (6a).

4. A method for manufacturing a bridge-type ball screw (1) according to claim 1 **characterized in that** the method comprises steps of:
inserting a cylindrical mandrel (8) having projections (9) into the nut (3) after having fitted the bridge members (5) in the bridge window (6) of the nut (3) and pressing the projections (9) of the mandrel (8) both onto the linking groove (5a) of the bridge members (5) and ball transfer parts (7) of the screw grooves (3a) of the nut (3) to form connection parts between the bridge members (5) and the nut (3) by plastic working, wherein the linking groove (5a) of the bridge member (5) and the ball transfer parts (7) of the screw grooves (3a) of the nut (3) are formed by plastic working simultaneously.

5. The method for manufacturing a bridge-type ball screw (1) of claim 4 wherein each of the projections (9) of the mandrel (8) is formed as having a configuration comprising a bridge forming part (9a) corresponding to the linking groove (5a) of the bridge member (5) and connection parts (9b) corresponding to the ball transfer part (7) of the screw groove (3a) of the nut (3).

6. The method for manufacturing a bridge-type ball screw (1) of claim 4 or 5 wherein an upper die (10) arranged above the nut (3) and restricting the upper surface of the bridge member (5) is lowered under a condition in which the mandrel (8) is horizontally supported and then further lowered under a condition in which the nut (3) is sandwiched and supported by the upper die (10) and the mandrel (8) to plastically work the connection parts between the linking grooves (5a) of the bridge member (5) and the screw grooves (3a) of the nut (3) and to simultaneously perform plastic deformation of the upper surface of the bridge member (5) in order to secure the bridge member (5) to the bridge window (6) of the nut (3) by caulking the upper surface of the bridge member (5).

7. The method for manufacturing a bridge-type ball screw (1) of claim 4 wherein the nut (3) and the bridge member (5) are hardened by simultaneous heat treatment after the plastic working.

## Patentansprüche

1. Brücken-Kugelgewindetrieb (1), umfassend:
einen Schraubenschaft (2), der an dem Außenumfang mit einer wendelförmigen Schraubennut (2a) ausgebildet ist;
eine Mutter (3), die an dem Innenumfang mit einer wendelförmigen Schraubennut (3a) ausgebildet und an dem Schraubenschaft (2) angepasst ist;
eine Vielzahl von Kugeln (4), die in einer von den einander gegenüberliegenden Schraubennuten (2a und 3a) gebildeten Rollenbahn untergebracht sind; und
Brückenglieder (5), die jeweils auf der Innenfläche mit einer Verbindungsnut (5a) ausgebildet sind, um die Rollenbahn zu einer Kreisbahn zu machen, und in ein Brückenfenster (6) eingesetzt sind, das an einem Umlauf der Mutter (3) gebildet wird, **dadurch gekennzeichnet, dass**:
mindestens ein Verbindungsteil zwischen der Verbindungsnut (5a) des Brückenglieds (5) und einem Kugeltransferteil (7) der Mutter (3) durch plastische Bearbeitung glatt ausgebildet ist, dass die Verbindungsnut (5a) des Brückenglieds (5) und die Kugeltransferteile (7) der Schraubennuten (3a) der Mutter (3) gleichzeitig durch plastische Bearbeitung ausgebildet sind, und dass der Kugeltransferteil (7) der Schraubennut (3a) der Mutter (3) bis zum Ende der Verbindungsnut (5a) des Brückenglieds (5) durchgängig ist und als konvexe Fläche mit einem vorgegebenen Krümmungsradius (R) ausgebildet ist.

2. Brücken-Kugelgewindetrieb nach Anspruch 1, wobei das Brückenglied (5) aus Sintermetall ausgebildet ist, das durch MIM (Metallspritzgießen) ausgebildet wird.

3. Brücken-Kugelgewindetrieb nach Anspruch 1, wobei ein radial außenseitiger Öffnungsabschnitt (6b) eines Brückenfensters (6) der Mutter (3) ein Eingriffsteil (6a) aufweist, das einen größeren Durchmesser als der Durchmesser des Brückenfensters (6) aufweist, und das Brückenelement (5) durch plastische Verformung mehrerer Punkte eines radialen Außenumfangs (5b) des Brückenglieds (5) so an der Mutter (3) befestigt ist, dass sie sich im engen Kontakt mit dem Eingriffsteil (6a) befinden.

4. Verfahren zur Herstellung eines Brücken-Kugelgewindetriebs (1) nach Anspruch 1, **dadurch gekennzeichnet, dass** das Verfahren die folgenden Schritte umfasst:
Einsetzen eines zylindrischen Dorns (8) mit Vorsprüngen (9) in die Mutter (3), nachdem die Brückenglieder (5) in das Brückenfenster (6) der Mutter (3) eingesetzt wurden, und Drücken der Vorsprünge (9) des Dorns (8) sowohl auf die Verbindungsnut (5a) der Brückenglieder (5), als auch auf die Kugeltransferteile (7) der Schraubennuten (3a) der Mutter (3), um durch plastische Bearbeitung Verbindungsteile zwischen den Brückengliedern (5) und der Mutter (3) auszubilden, wobei die Verbindungsnut (5a) des Brückenglieds (5) und die Kugeltransferteile (7) der Schraubennuten (3a) der Mutter (3) durch plastische Bearbeitung gleichzeitig ausgebildet werden.

5. Verfahren zur Herstellung eines Brücken-Kugelgewindetriebs (1) nach Anspruch 4, wobei jeder der Vorsprünge (9) des Dorns (8) so ausgebildet ist, dass er eine Anordnung aufweist, die ein Brückenbildungsteil (9a) entsprechend der Verbindungsnut (5a) des Brückenglieds (5) und Verbindungsteile (9b) entsprechend dem Kugeltransferteil (7) der Schraubennut (3a) der Mutter (3) umfasst.

6. Verfahren zur Herstellung eines Brücken-Kugelgewindetriebs (1) nach Anspruch 4 oder 5, wobei eine obere Matrize (10), die über der Mutter (3) angeordnet ist und die obere Fläche des Brückenglieds (5) einschränkt, in einem Zustand abgesenkt wird, in dem der Dorn (8) horizontal gestützt wird, und anschließend in einem Zustand, in dem die Mutter (3) eingeklemmt und von der oberen Matrize (10) und dem Dorn (8) gestützt wird, weiter abgesenkt wird, um die Verbindungsteile zwischen den Verbindungsnuten (5a) des Brückenglieds (5) und den Schraubennuten (3a) der Mutter (3) einer plastische Bearbeitung zu unterziehen und gleichzeitig eine plastische Verformung der oberen Fläche des Brückenglieds (5) durchzuführen, um das Brückenglied (5) an dem Brückenfenster (6) der Mutter (3) zu befestigen, indem die obere Fläche des Brückenglieds (5) abgedichtet wird.

7. Verfahren zur Herstellung eines Brücken-Kugelgewindetriebs (1) nach Anspruch 4, wobei die Mutter (3) und das Brückenglied (5) durch gleichzeitige Wärmebehandlung nach der plastische Bearbeitung gehärtet werden.

## Revendications

1. Vis à billes de type pont (1) comprenant :
une tige de vis (2) formée sur la circonférence extérieure avec une rainure de vis hélicoïdale (2a) ;
un écrou (3) formé sur la circonférence intérieure avec une rainure de vis hélicoïdale (3a) et accouplé à la tige de vis (2) ;
une pluralité de billes (4) logées dans un chemin de roulement formé par les rainures de vis opposées (2a et 3a) ; et
des éléments du pont (5) formés chacun sur la surface intérieure avec une rainure de liaison (5a) pour faire du rail de roulement un rail de circulation et
montés dans une fenêtre du pont (6) formée sur un barillet de l'écrou (3) **caractérisé en :**
**ce qu'**au moins une pièce de raccordement entre la rainure de raccordement (5a) de l'élément du pont (5) et une pièce de transfert de bille (7) de l'écrou (3) est facilement formée par manipulation plastique, que la rainure de liaison (5a) de l'élément du pont (5) et les pièces de transfert de bille (7) des rainures de vis (3a) de l'écrou (3) sont formées simultanément par manipulation plastique et **en ce que** la pièce de transfert de bille (7) de la rainure de vis (3a) de l'écrou (3) est continue jusqu'à l'extrémité de la rainure de liaison (5a) de l'élément du pont (5) et formée comme une surface convexe ayant un rayon de courbure prédéterminé (R).

2. Vis à billes de type pont selon la revendication 1, dans laquelle l'élément du pont (5) est formé de métal fritté formé par MIM (moulage par injection de métal).

3. Vis à billes de type pont selon la revendication 1, dans laquelle une partie ouvrante latéralement extérieure (6b) d'une fenêtre de pont (6) de l'écrou (3) a une partie engagée (6a) ayant un diamètre plus grand que celui de la fenêtre du pont (6) et l'élément du pont (5) est fixé à l'écrou (3) en déformant plastiquement plusieurs points d'une périphérie extérieure radialement (5b) de l'élément du pont (5) de sorte qu'ils sont étroitement en contact avec la partie engagée (6a).

4. Procédé de fabrication d'une vis à billes de type pont (1) selon la revendication 1 **caractérisé en ce que** le procédé comprend les étapes de :
l'insertion d'un mandrin cylindrique (8) ayant des saillies (9) dans l'écrou (3) après avoir installé les éléments du pont (5) dans la fenêtre du pont (6) de l'écrou (3) et après avoir appuyé les saillies (9) du mandrin (8) à la fois sur la rainure de liaison (5a) des éléments du pont (5) et sur les pièces de transfert de bille (7) des rainures de vis (3a) de l'écrou (3) pour manipulation plastique des pièces de raccordement entre les éléments du pont (5) et l'écrou (3), dans lesquelles la rainure de liaison (5a) du pont (5) et les pièces de transfert de bille (7) des rainures de vis (3a) de l'écrou (3) sont formées simultanément par manipulation plastique.

5. Procédé de fabrication d'une vis à billes de type pont (1) selon la revendication 4, dans lequel chacune des saillies (9) du mandrin (8) est formée comme ayant une configuration comprenant une pièce en forme de pont (9a) correspondant à la rainure de liaison (5a) de l'élément du pont (5) et des pièces de raccordement (9b) correspondant à la pièce de transfert à billes (7) de la rainure de vis (3a) de l'écrou (3).

6. Procédé de fabrication d'une vis à billes de type pont (1) selon la revendication 4 ou 5 dans lequel une matrice supérieure (10) disposée au-dessus de l'écrou (3) et limitant la surface supérieure de l'élément du pont (5) est abaissée dans une condition dans laquelle le mandrin (8) est soutenu horizontalement puis abaissée dans une condition dans laquelle l'écrou (3) est pris en sandwich et soutenu par la matrice supérieure (10) et le mandrin (8) pour manipuler plastique les pièces de raccordement entre les rainures de liaison (5a) de l'élément du pont (5) et les rainures (3a) de l'écrou (3) et pour effectuer simultanément une déformation plastique de la surface supérieure de l'élément du pont (5) afin de fixer l'élément du pont (5) à la fenêtre du pont (6) de l'écrou (3) en calfeutrant la surface supérieure de l'élément du pont (5).

7. Procédé de fabrication d'une vis à billes de type pont (1) selon la revendication 4, dans lequel l'écrou (3) et l'élément du pont (5) sont durcis par traitement thermique simultané après le manipulation plastique.
